# EUROPÄISCHE PATENTSCHRIFT

(11) **EP 0 753 962 B1**
(45) Veröffentlichungstag und Bekanntmachung des Hinweises auf die Patenterteilung: **10.02.1999**
(21) Anmeldenummer: 96111007.9
(22) Anmeldetag: 09.07.1996
(51) Int. Cl.: H04N 5/44

(54) **Signalverteiler für eine Video- oder Audioempfangsanlage**
Signal switch for a video or audio receiving device
Commutateur de signaux pour un système de réception vidéo ou audio

(30) Priorität: 13.07.1995 DE 19525451
(43) Veröffentlichungstag der Anmeldung: 15.01.1997
(73) Patentinhaber: Thoma, Friedrich, 91599 Dentlein am Forst (DE)
(72) Erfinder: Thoma, Friedrich, 91599 Dentlein am Forst (DE)
(74) Vertreter: Klug, Horst, Dipl.-Ing. (FH)

(56) Entgegenhaltungen:
- EP-A- 0 319 235
- EP-A- 0 409 702
- WO-A-95/01059
- GB-A- 2 295 755
- US-A- 4 947 244

## Beschreibung

Die Erfindung betrifft einen Signalverteiler für eine Video- oder Audioempfangsanlage, der zwischen mehrere Empfangsgeräte (Videogeräte, Videorecorder, Satellitenreceiver, Audiogeräte) und einen Decoder zum Decodieren codiert ausgestrahlter Video- oder Audioprogramme eingeschaltet ist, und der zum Zuschalten des vom Dekoder decodierten Video- oder Audioprogrammes auf ein beliebiges, dieses Programm anforderndes Empfangsgerät dient.

Wenn mit mehreren Empfangsgeräten, z.B. einem Videogerät und einem Video-recorder, codiert ausgestrahlte Sendungen empfangen werden, dann ist es entweder nötig, mehrere Decoder anzuschaffen, oder den Decoder jeweils von Hand auf das eine oder andere Empfangsgerät umzustecken bzw. über eine Handumschaltung umzuschalten. In diesem Zusammenhang wurde bereits angeregt, einen fernbedienbaren Umschalter zu entwickeln.

Die Anschaffung mehrerer Decoder ist sehr kostenintensiv und das Umstecken oder Umschalten von Hand ist umständlich, unkomfortabel umd schließt Fehlbedienungen nicht aus.

WO95/01059 beschreibt einen Signalverteiler für eine Video- oder Audioempfangsanlage, der zwischen mehrere Empfangsgeräte und einen Videodecoder geschaltet ist.

Der Erfindung liegt die Aufgabe zugrunde, zur Vermeidung dieser Nachteile einen Signalverteiler zu schaffen, der einen Decoder selbsttätig auf ein oder mehrere Empfangsgeräte schaltet, wenn von diesen der Empfang decodierter Sendungen angefordert wird.

Diese Aufgabe wird von der Erfindung dadurch gelöst, daß der Signalverteiler eine elektronische Schaltung enthält, die aus dem von einem Empfangsgerät gelieferten Video- oder Audiosignal die zugehörige Senderkennung analysiert und über eine Zuordnungstabelle "Senderkennung/codiertes Programm" den programmspezifischen Decoder selbsttätig auf das anfordernde Empfangsgerät schaltet. Auf diese Weise wird erreicht, daß ohne zusätzlichen äußeren Eingriff jeweils das eine, oder auch mehrere Empfangsgeräte, die ein codiert ausgestrahltes Programm empfangen, vom zugehörigen Decoder mit den decodierten Video- oder Audiosignalen versorgt werden.

Der Signalverteiler, der mehrere Eingänge für von den Empfängern gelieferte Video- oder Audiosignale und eine gleiche Anzahl von Ausgängen für das vom Decoder gelieferte decodierte Video- oder Audiosignal enthält, kann einen Mikroprozessor und einen elektronischen Baustein zur Signalaufbereitung (Extraktion des VPS-, RDS- oder ähnlichen Signals aus dem Video- oder Audiosignal) und zur Weitergabe der so gewonnenen Senderkennung an den Mikroprozessor umfassen, der eine elektronische Schaltvorrichtung ansteuert, mit der jeder Eingang eines Video- oder Audiosignals auf einen Ausgang zum Decoder und ein Eingang vom Decoder auf jeden Ausgang zum Empfänger schaltbar ist. Die Schaltvorrichtung kann dabei in an sich bekannter Weise als Kreuzschienenschaltung ausgelegt sein.

Der Mikroprozessor kann einen Taktgeber umfassen, der taktweise aufeinanderfolgend jeden Eingang auf den Baustein zur Signalaufbereitung schaltet. Auf diese Weise wird ständig überwacht, ob ein Empfänger - und gegebenenfalls welcher - ein decodiertes Programm anfordert.

Schließlich kann im Mikroprozessor neben der Zuordnungstabelle "Senderkennung/codiertes Programm" auch eine "Prioritätentabelle" gespeichert sein, die allen Eingängen unterschiedliche Prioritäten zuordnet, wobei die Schaltung so ausgelegt ist, daß bei gleichen codierten Video- oder Audiosignalen von mehreren Empfängern der Eingang mit der höheren Priorität auf den Decoder geschaltet wird. Auf diese Weise kann z.B. erreicht werden, daß, wenn mehrere Empfänger das gleiche codierte Programm empfangen, immer die Video- oder Audiosignale des Empfängers mit der besten Empfangsqualität dem Decoder zugeleitet werden.

Der Signalverteiler gemäß der Erfindung kann bei der Verarbeitung sowohl analog als auch digital ausgestrahlter Sendungen eingesetzt werden und es können auch - ohne daß sich am erfindungsgemäßen Prinzip etwas ändert - mehrere Decoder mit einem Signalverteiler zusammenarbeiten, wenn mehrere codiert ausgestrahlte Programme empfangen werden sollen.

In den Zeichnungen sind Ausführungsbeispiele der Erfindung dargestellt. Es zeigen:
- Fig. 1: ein Funktionsschema des erfindungsgemäßen Signalverteilers,
- Fig. 2: einen Signal-Flußplan des erfindungsgemäßen Signalverteilers,
- Fig. 3: ein Schaltschema des erfindungsgemäßen Signalverteilers und
- Fig. 4: den Signal-Flußplan eines TV-Decoders nach dem bekannten Stand der Technik.

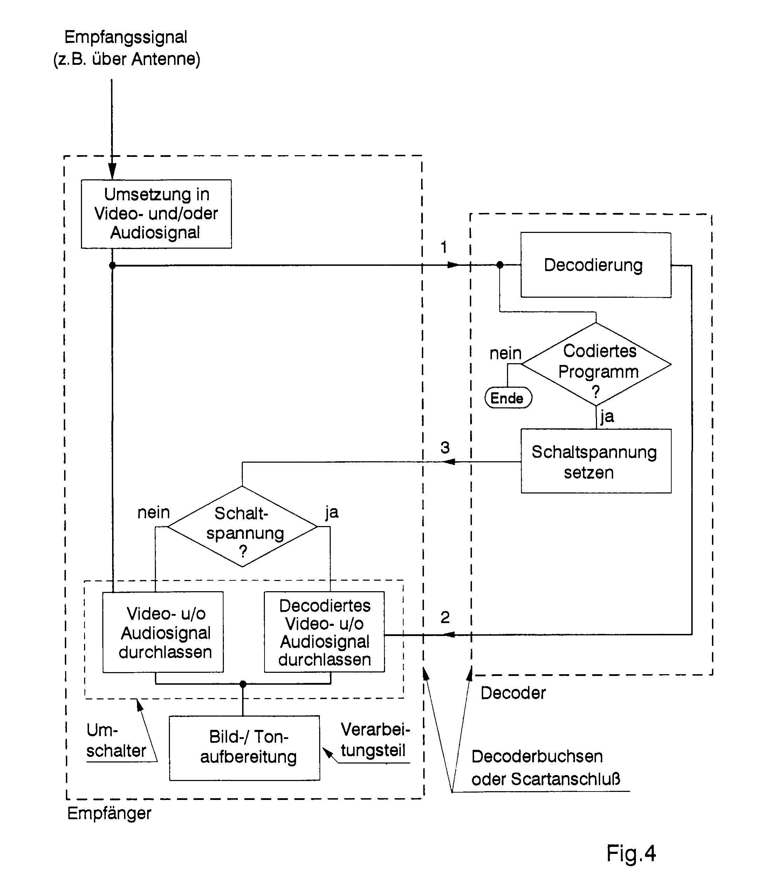

Die Fig. 4 zeigt das Schema des Signalflusses in einem System mit einem einzigen Empfangsgerät und einem Decoder für ein bestimmtes codiertes Programm gemäß dem Stand der Technik. Das ankommende Hochfrequenzsignal wird zunächst in ein Video- oder Audiosignal umgesetzt und an den Decoder gegeben. Dieser stellt fest, ob es sich um ein codiertes Programm handelt und setzt im Ja-Falle eine Schaltspannung, die den Umschalter des Empfangsgerätes vom direkten Durchschleifen auf Übernahme des decodierten Video- oder Audiosignals vom Decoder zur Bild-/Tonaufbereitung schaltet.

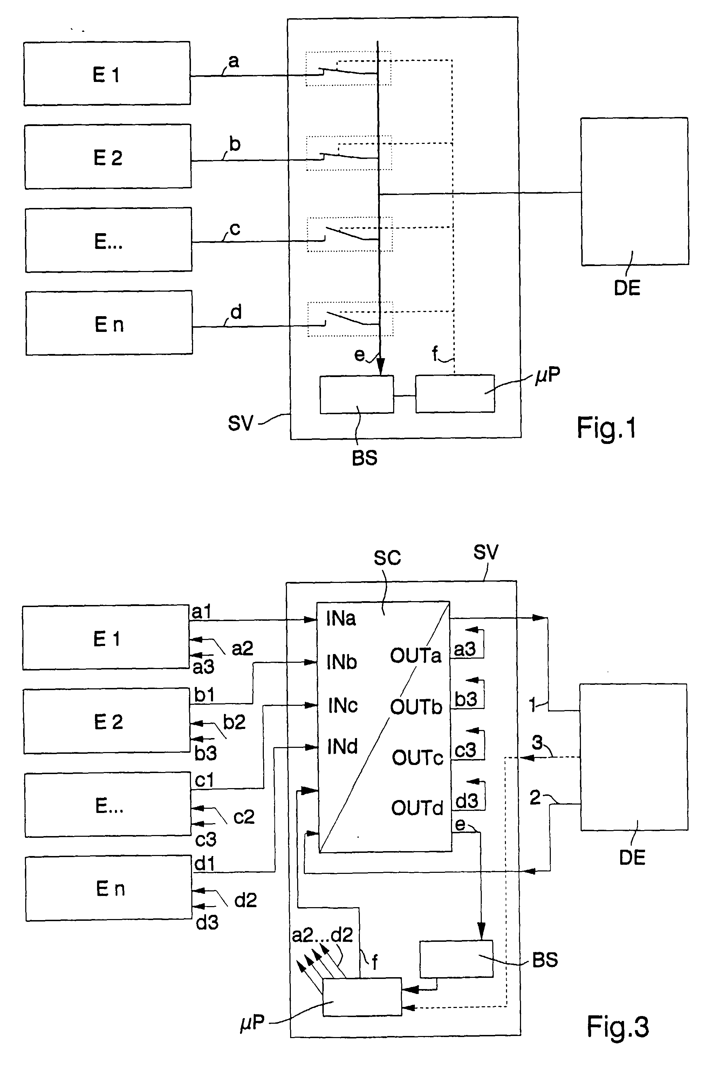

Die Fig. 1, welche ein Funktionsschema des Signalverteilers zeigt und Fig. 3, die ein zugehöriges Schaltschema darstellt, sind gemeinsam zu betrachten. Die Empfänger E 1 bis E n, die Video- oder Audiogeräte sein können, sind über Verbindungen a, b, c, d an den Signalverteiler SV angeschlossen. Andrerseits sind ein oder mehrere Decoder DE ebenfalls über den Eingang 1, den Ausgang 2 und - falls vorhanden - den Schaltspannungsausgang 3 mit dem Signalverteiler SV verbunden . Der Signalverteiler SV umfaßt im wesentlichen einen Mikroprozessor µP, welcher der gewünschten Funktion entsprechend programmiert ist, einen Baustein BS zur Signalaufbereitung (Extraktion des VPS-, RDS- o.ä. Signals aus dem Video- oder Audiosignal) und zur Weitergabe der mit diesem Baustein BS gewonnenen Senderkennung an den Mikroprozessor µP, sowie eine Schaltvorrichtung SC, mit der jeder Eingang (INa bis INd) auf den Ausgang 1 zum Decoder DE und der Eingang vom Decoder DE auf jeden Ausgang OUTa bis OUTd geschaltet werden kann. Im Mikroprozessor µP sind unter anderem eine Zuordnungstabelle "Senderkennung/codiertes Programm", sowie eine "Prioritätentabelle" für die angeschlossenen Empfänger E1 bis En gespeichert. Die letztere legt fest, wessen Signal bei gleicher Senderkennung auf mehrerer Empfängern dem Decoder DE zugeführt werden soll.

Der Mikroprozessor µP liefert ein Taktsignal über f, das die Eingänge der Schaltvorrichtung SC ständig nacheinander über e auf den Signalaufbereitungsbaustein BS sowie den Decoder DE gibt. Der Signalaufbereitungsbaustein BS liefert die zugehörigen Senderkennungen an den Mikroprozessor µP und der stellt mit Hilfe der oben genannten Zuordnungstabelle fest, ob es sich um einen Sender mit codierten Programmen handelt. Wenn dies der Fall ist, speichert der Mikroprozessor µP den anfordernden Empfänger E1, E2, E... oder En. Ergibt die nachfolgende Taktabfrage der weiteren Empfänger, daß eine weitere Senderkennung für das codierte Programm eintrifft, so wählt der Mikroprozessor µP aus der oben genannten Prioritätentabelle den Empfänger mit der höheren Priorität als Quelle für den Decoder DE aus und stellt über f die Schaltvorrichtung so, daß dieses Quellensignal an alle anfordernden Empfänger verteilt wird, so lange diese Quelle das codierte Programm liefert.

Schließlich gibt der Mikroprozessor µP über die Anschlüsse a2 bis d2 die vom Decoder DE gelieferte Schaltspannung an die Empfänger E1 bis En weiter. Bei Verwendung eines Decoders mit einem Schaltspannungsausgang 3 wird dieser zusätzlich mit einem entsprechenden Eingang des Mikroprozessors µP verbunden. Der Mikroprozessor gibt in diesem Falle über die Ausgänge a2 bis d2 nur dann eine Schaltspannung ab, wenn der Sender tatsächlich momentan codiert sendet und daher eine Schaltspannung "ungleich Null" vom Decoder DE geliefert wird. Bei dieser Ausführung wird also das Video- oder Audiosignal nur während einer codierten Sendung über den Decoder zu dem anfordernden Empfänger geführt.

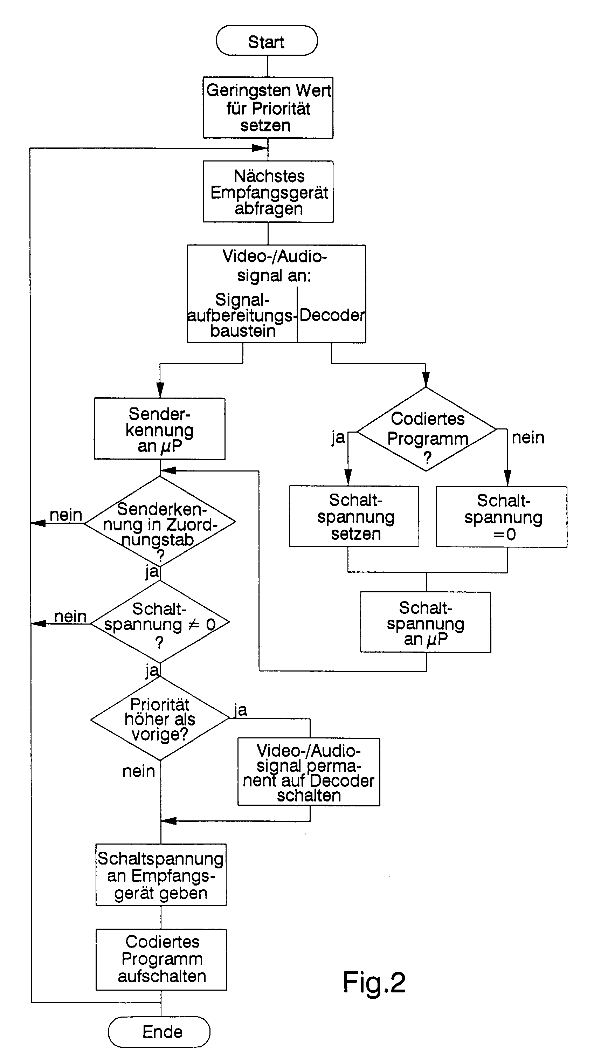

Der in Fig. 2 dargestellte Signal-Flußplan, der keiner Erläuterung im einzelnen bedarf, stellt die Ablauflogik dar, weil die Fig. 1 und 3 die diesbezüglichen Zusammenhänge wegen der überlagerten Softwarefunktionen nur näherungsweise veranschaulichen können.

## Patentansprüche

1. Signalverteiler für eine Video- oder Audioempfangsanlage, der zwischen mehrere Empfangsgeräte (E1 bis En) und einem Decoder (DE) zum Decodieren codiert ausgestrahlter Video- oder Audioprogramme eingeschaltet ist, und der zum Zuschalten des vom Dekoder decodierten Video- oder Audioprogramms auf ein beliebiges, dieses Programm anforderndes Empfangsgerät (E1 bis En) dient, **dadurch gekennzeichnet,** daß der Signalverteiler eine elektronische Schaltung enthält, die aus dem von einem Empfangsgerät (E1 bis En) gelieferten Video- oder Audiosignal die zugehörige Senderkennung analysiert und über eine Zuordnungstabelle "Senderkennung/codiertes Programm" den Decoder (DE) selbsttätig auf das anfordernde Empfangsgerät schaltet.

2. Signalverteiler nach Anspruch 1, **dadurch gekennzeichnet,** daß er mehrere Eingänge (INa bis INd) für von den Empfängern (E1 bis En) gelieferte Video- oder Audiosignale und eine gleiche Anzahl von Ausgängen (OUTa bis OUTd) für das vom Decoder (DE) gelieferte decodierte Video- oder Audiosignal enthält und daß er einen Mikroprozessor (µP) und einen elektronischen Baustein (BS) zur Signalaufbereitung und zur Weitergabe der so gewonnenen Senderkennung an den Microprozessor (µP) umfaßt, der eine elektronische Schaltvorrichtung (SC) ansteuert, mit der jeder Eingang (INa bis INd) eines Video- oder Audiosignals auf den Ausgang (1) zum Decoder (DE) und der Eingang (2) vom Decoder (DE) auf jeden Ausgang (OUTa bis OUTd) schaltbar ist.

3. Signalverteiler nach Anspruch 2, **dadurch gekennzeichnet,** daß die Schaltvorrichtung (SC) als Kreuzschienenschaltung ausgelegt ist.

4. Signalverteiler nach Anspruch 2 oder 3, **dadurch gekennzeichnet,** daß der Mikroprozessor (µP) einen Taktgeber umfaßt, der taktweise aufeinanderfolgend jeden Eingang (lNa bis INd) auf den Baustein (BS) zur Signalaufbereitung schaltet.

5. Signalverteiler nach Anspruch 4, **dadurch gekennzeichnet,** daß im Mikroprozessor (µP) neben der Zuordnungstabelle "Senderkennung/codiertes Programm" auch eine "Prioritätentabelle" gespeichert ist, die allen Eingängen (INa bis INd) unterschiedliche Prioritäten zuordnet, wobei die Schaltung so ausgelegt ist, daß bei gleichen codierten Video- oder Audiosignalen von mehreren Empfängern (E1 bis En) der Eingang mit der höheren Priorität auf den Decoder (DE) geschaltet wird.

## Claims

1. A signal distributor for a video or audio receiving station which is hooked up between several receivers (E1 to En) and a decoder (DE) for decoding video or audio programmes broadcast in an encoded manner and is used for switching the video or audio programme decoded by the decoder to a random receiver (El to En) demanding said programme, characterized in that the signal distributor comprises an electronic circuit which from the video or audio signal supplied by the receiver (El to En) analyses the associated station identification and switches the decoder (DE) automatically to the requesting receiver by way of a "station identification/encoded programme" cross-reference table.

2. A signal distributor as claimed in claim 1, characterized in that it comprises several inputs (INa to INd) for video or audio signals supplied by the receivers (E1 to En) and an equal number of outputs (OUTa to OUTd) for the decoded video or audio signal supplied by the decoder (DE) and that it comprises a microprocessor (µP) and an electronic component (BS) for signal processing and for relaying the thus gained station identificaton to the microprocessor (µP) which triggers an electronic switching apparatus (SC) with which each input (INa to INd) of a video or audio signal can be switched to the output (1) to the decoder (DE) and the input (2) from the decoder (DE) to each output (OUTa to OUTd).

3. A signal distributor as claimed in claim 2, characterized in that the switching apparatus (SC) is arranged as a cross-bar circuit.

4. A signal distributor as claimed in claim 2 or 3, characterized in that the microprocessor (µP) comprises a clock generator which switches successively in cycles each input (INa to INd) to the component (BS) for signal processing.

5. A signal distributor as claimed in claim 4, characterized in that a "priority table" is also stored in the microprocessor (µP) in addition to the "station identification/encoded programme" cross-reference table, which priority table assigns different priorities to all inputs (INa to INd), with the circuit being designed such that the input with the higher priority is switched to the decoder (DE) in the case of similarly encoded video or audio signals from several receivers (E1 to En).

## Revendications

1. Répartiteur de signaux pour installation de réception audio ou vidéo, intercalé entre plusieurs récepteurs (E1 à En) et un décodeur (DE) pour le décodage de programmes audio ou vidéo diffusés cryptés, et servant à la commutation du programme audio ou vidéo décrypté par le décodeur sur un récepteur (E1 à En) quelconque appelant ce programme, **caractérisé en ce que** le répartiteur de signaux comporte un montage électronique, lequel analyse l'indicatif d'émetteur associé au signal audio ou vidéo livré par un récepteur (E1 à En) et commute automatiquement le décodeur (DE) sur le récepteur appelant au moyen d'un tableau d'affectation "Indicatif d'émetteur/programme crypté".

2. Répartiteur de signaux suivant revendication 1, **caractérisé en ce qu'**il comporte plusieurs entrées (INa à INd) pour les signaux audio ou vidéo livrés par les récepteurs (E1 à En) et un nombre équivalent de sorties (OUTa à OUTd) pour le signal audio ou vidéo livré décrypté par le décodeur (DE), et en ce qu'il comprend un microprocesseur (µP) et un composant électronique (BS) pour le traitement du signal et pour la transmission au microprocesseur (µP) de l'indicatif d'émetteur ainsi extrait, ledit microprocesseur (µP) commandant un dispositif de commutation (SC) par lequel chaque entrée (INa à INd) d'un signal audio ou vidéo peut être commutée sur la sortie (1) vers le décodeur (DE) et l'entrée (2) peut être commutée du décodeur (DE) sur chaque sortie (OUTa à OUTd).

3. Répartiteur de signaux suivant revendication 2, **caractérisé en ce que** le dispositif de commutation (SC) est conçu comme montage à barres croisées.

4. Répartiteur de signaux suivant revendication 2 ou 3, caractérisé e n c e que le microprocesseur (µP) comprend une horloge interne commutant cycliquement et successivement chaque entrée (INa à INd) sur le composant (BS) pour le traitement des signaux.

5. Répartiteur de signaux suivant revendication 4, **caractérisé en ce qu'** un "tableau de priorités" est mémorisé dans le microprocesseur (µP) en plus du tableau d'affectation "Indicatif d'émetteur/programme crypté", ledit tableau de priorités attribuant différents ordres de priorité à toutes les entrées (INa à lNd), la commutation étant alors conçue de sorte que pour des signaux audio ou vidéo identiques de plusieurs récepteurs (E1 à En), c'est l'entrée disposant de la priorité la plus élevée qui sera commutée sur le décodeur (DE).
